# EUROPEAN PATENT APPLICATION

(11) **EP 2 600 185 A1**
(43) Date of publication of application: **05.06.2013**
(21) Application number: 11812282.9
(22) Date of filing: 14.07.2011
(51) Int. Cl.: G02B 26/10, G03B 21/00, H04N 5/74

(54) **PROJECTOR**

(30) Priority: 29.07.2010 JP 2010169928
(71) Applicant: Funai Electric Co., Ltd., Daito-shi Osaka 574-0013 (JP)
(72) Inventor: NAGASHIMA, Kenji, Daito-shi Osaka 574-0013 (JP)
(74) Representative: Grünecker, Kinkeldey, Stockmair & Schwanhäusser
(86) International application number: PCT/JP2011/066050
(87) International publication number: WO 2012/014690

(57) **Abstract**

A projector capable of detecting the position of a detection object while suppressing complication of the structure is provided. This projector (100) is so configured that the optical axes of a laser beam of visible light emitted from a first laser beam generation portion (61a, 62a, 63a) and a laser beam of invisible light emitted from a second laser beam generation portion (64a) substantially coincide with each other.

## Description

### Technical Field

The present invention relates to a projector, and more particularly, it relates to a projector including a laser beam generation portion.

### Background Art

In general, a projector including a laser beam generation portion is known. Such a projector is disclosed in Japanese Patent Laying-Open No. 2009-258569, for example.

In the aforementioned Japanese Patent Laying-Open No. 2009-258569, there is disclosed a laser scanning projector including a plurality of laser diodes (laser beam generation portions) generating laser beams of three colors of red, green, and blue, respectively, a laser diode (laser beam generation portion) generating an infrared laser beam, a rotatable MEMS mirror, and a photodiode detecting reflected light of the infrared laser beam. This laser scanning projector is configured to project an image on a wall surface or the like by reflecting the laser beams of three colors of red, green, and blue generated from the plurality of laser diodes, respectively by a main mirror portion of the MEMS mirror and scanning the laser beams by rotation of the MEMS mirror.

Furthermore, this laser scanning projector is configured to emit the infrared laser beam generated from the laser diode to the vicinity above the wall surface (1 mm above the wall surface) along the front surface of the wall surface through a beam splitter, a first mirror frame of the MEMS mirror, and a reflective mirror. In other words, the infrared laser beam is emitted through a path different from a path to emit the laser beams of three colors of red, green, and blue. The infrared laser beam is scanned horizontally above the wall surface by the rotation of the MEMS mirror. Thus, a distance from the finger of a user to the photodiode is measured by detecting light reflected by the finger by the photodiode when the finger touches the wall surface. Coordinates on the wall surface touched by the finger are obtained on the basis of the distance from the finger to the photodiode and the coordinates of the image in a horizontal plane emitted with the laser beams of three colors of red, green, and blue at the point of time when the light reflected from the finger is detected. Thus, it is capable of detecting that the finger touches an icon or the like on the basis of the coordinates on the wall surface touched by the finger when the icon is projected with the laser beams of three colors of red, green, and blue, for example.

### Prior Art

### Patent Document

Patent Document 1: Japanese Patent Laying-Open No. 2009-258569

### Summary of the Invention

### Problem to be Solved by the Invention

However, in the laser scanning projector described in the aforementioned Patent Laying-Open No. 2009-258569, the path to emit the infrared laser beam for detecting the finger (detection object) of the user and the path to emit the laser beams of three colors of red, green, and blue are different from each other, and hence it is necessary to provide the reflective mirror or the like separately to emit the infrared laser beam to an area on which the image is projected with the laser beams of three colors of red, green, and blue. Therefore, there is such a problem that the structure is complicated.

The present invention has been proposed in order to solve the aforementioned problem, and an object of the present invention is to provide a projector capable of detecting the position of a detection object while suppressing complication of the structure. Means for Solving the Problem and Effects of the Invention

A projector according to an aspect of the present invention includes a first laser beam generation portion emitting a laser beam of visible light, a second laser beam generation portion emitting invisible light scanned in synchronization with the laser beam of the visible light emitted from the first laser beam generation portion to detect the position of a detection object, and a projection portion projecting an image on an arbitrary projection area by scanning the laser beam of the visible light emitted from the first laser beam generation portion, and is so configured that the optical axes of the laser beam of the visible light emitted from the first laser beam generation portion and a laser beam of the invisible light emitted from the second laser beam generation portion substantially coincide with each other.

As hereinabove described, this projector according to the aspect is so configured that the optical axes of the laser beam of the visible light emitted from the first laser beam generation portion and the laser beam of the invisible light emitted from the second laser beam generation portion substantially coincide with each other, whereby the laser beam of the invisible light emitted from the second laser beam generation portion is emitted to the area on which the image is projected with the laser beam of the visible light emitted from the first laser beam generation portion, and hence it is not necessary to provide a reflective mirror or the like separately to emit the laser beam of the invisible light to the area on which the image is projected with the laser beam of the visible light. Therefore, the structure can be inhibited from complication. Furthermore, the projector includes the second laser beam generation portion emitting the invisible light scanned in synchronization with the laser beam of the visible light emitted from the first laser beam generation portion to detect the position of the detection object, whereby the position of the detection object can be detected on the basis of detection of the laser beam of the invisible light reflected by the detection object, for example.

Preferably, the aforementioned projector according to the aspect is so configured that the laser beam of the visible light and the laser beam of the invisible light are emitted to the projection portion in a state where the optical axes of the laser beam of the visible light emitted from the first laser beam generation portion and the laser beam of the invisible light emitted from the second laser beam generation portion substantially coincide with each other. According to this structure, the image can be projected on the projection area by the projection portion in the state where the optical axes of the laser beam of the visible light and the laser beam of the invisible light substantially coincide with each other.

Preferably, the aforementioned projector according to the aspect is so configured that the laser beam of the visible light emitted from the first laser beam generation portion and the laser beam of the invisible light emitted from the second laser beam generation portion are scanned through the same scan path. According to this structure, the optical axes of the laser beam of the visible light emitted from the first laser beam generation portion and the laser beam of the invisible light emitted from the second laser beam generation portion coincide with each other, and hence the position of the detection object can be easily detected on the basis of the scan path of the laser beam of the visible light emitted from the first laser beam generation portion at the point of time when the laser beam of the invisible light is reflected by the detection object, for example.

Preferably, the aforementioned projector according to the aspect further includes a light detector to detect the laser beam of the invisible light emitted from the second laser beam generation portion and reflected by the detection object. According to this structure, even if the detection object is black, the laser beam of the invisible light reflected by the detection object can be detected by the light detector so that the position of the detection object can be detected on the basis of the detection of the laser beam of the invisible light by the light detector.

Preferably in this case, the aforementioned projector further includes a control portion detecting the position of the detection object on the basis of a scan signal of the laser beam of the visible light emitted from the first laser beam generation portion at the point of time when the light detector detects the laser beam of the invisible light emitted from the second laser beam generation portion and reflected by the detection object. According to this structure, dissimilarly to a case where the position of the detection object is detected by calculating a distance between the detection object and the light detector, for example, the position of the detection object can be detected on the basis of the scan signal of the laser beam which the projector intrinsically has, and hence the operation (calculation) time required to detect the position of the detection object can be reduced.

Preferably in the aforementioned projector including the control portion, the control portion is configured to detect coordinates based on the scan signal of the laser beam of the visible light emitted from the first laser beam generation portion at the point of time when the light detector detects the laser beam of the invisible light emitted from the second laser beam generation portion and reflected by the detection object as the coordinates of the detection object. According to this structure, the coordinates (position) of the detection object can be detected on the basis of the scan signal of the laser beam which the projector intrinsically has, and hence the operation (calculation) time required to detect the coordinates (position) of the detection object can be reduced.

Preferably in the aforementioned projector including the control portion detecting the position of the detection object, the light detector includes a first light detector and a second light detector whose height from the projection area is higher than that of the first light detector, and the control portion is configured to perform control of calculating the height of the detection object from the projection area on the basis of a difference between the intensity of the invisible light detected by the first light detector and the intensity of the invisible light detected by the second light detector. According to this structure, in addition to the position of the detection object on a plane surface, the height of the detection object from the projection area is detected, and hence the three-dimensional position of the detection object can be detected.

Preferably in this case, the aforementioned projector is configured to project an image corresponding to an icon on the projection area by scanning the laser beam of the visible light emitted from the first laser beam generation portion, and the control portion is configured to determine an operation of dragging the icon or an operation of separating the detection object from the icon on the basis of the height of the detection object from the projection area detected by the first light detector and the second light detector and to project a picture representing drag of the icon and movement of the icon in conjunction with movement of the detection object when determining that the icon has been dragged. According to this structure, in addition to an operation on the projection area such as an operation of selecting the icon, an operation at a height position away from the projection area to some extent such as the operation of dragging the icon can be performed, and hence the types of possible operations can be increased.

Preferably in the aforementioned projector projecting the image corresponding to the icon on the projection area, the control portion is configured to determine that the detection object has dragged the icon projected on the projection area if the height of the detection object from a surface of the projection area is less than a prescribed height, when determining that the detection object is separated from the surface of the projection area after determining that the height of the detection object from the surface of the projection area is substantially zero on the basis of the height of the detection object from the projection area detected by the first light detector and the second light detector. According to this structure, the picture representing the drag of the icon can be easily projected on the basis of the operation of the detection object.

Preferably in this case, the control portion is configured to determine that the detection object has dropped the icon projected on the projection area when determining that the height of the detection object from the surface of the projection area is substantially zero on the basis of the height of the detection object from the projection area detected by the first light detector and the second light detector after determining that the detection object has dragged the icon projected on the projection area. According to this structure, a picture representing the drop of the icon can be easily projected on the basis of the operation of the detection object.

Preferably in the aforementioned projector projecting the image corresponding to the icon on the projection area, the control portion is configured to determine that the detection object has released the icon projected on the projection area if the height of the detection object from the surface of the projection area is at least a prescribed height, when determining that the detection object is separated from the surface of the projection area after determining that the height of the detection object from the surface of the projection area is substantially zero on the basis of the height of the detection object from the projection area detected by the first light detector and the second light detector. According to this structure, a picture representing the release of the icon can be easily projected on the basis of the operation of the detection object.

Preferably in the aforementioned projector including the light detector, the detection object is a human finger, and the light detector is configured to detect the laser beam of the invisible light emitted from the second laser beam generation portion and reflected by the human finger as the detection object. According to this structure, a position on the projection area touched by the human finger can be detected when the human finger touches the projection area, for example.

Preferably in the aforementioned projector according to the aspect, the second laser beam generation portion includes an infrared laser beam generation portion emitting an infrared laser beam as the invisible light. According to this structure, the position of the detection object can be detected with the infrared laser beam emitted from the second laser beam generation portion as the invisible light. Furthermore, also when a black image is displayed on the projection area, the infrared laser beam as the invisible light is reflected by the detection object so that the position of the detection object can be detected.

Preferably in this case, the first laser beam generation portion includes a laser beam generation portion emitting red, green, and blue laser beams as the visible light. According to this structure, a color image can be displayed on the projection area with the red, green, and blue laser beams emitted from the first laser beam generation portion as the visible light.

Preferably, the aforementioned projector including the laser beam generation portion emitting the red, green, and blue laser beams is so configured that the optical axes of the laser beams of the visible light and the laser beam of the invisible light substantially coincide with each other by synthesizing the laser beams of red, green, and blue visible light emitted from the first laser beam generation portion and the infrared laser beam emitted from the second laser beam generation portion on the same optical axis. According to this structure, a color image can be displayed on the projection area with the red, green, and blue laser beams emitted from the first laser beam generation portion as the visible light, and the position of the detection object can be detected with the infrared laser beam emitted from the second laser beam generation portion as the invisible light. Furthermore, also when a black image is displayed on the projection area with the red, green, and blue laser beams as the visible light, the infrared laser beam as the invisible light is reflected by the detection object so that the position of the detection object can be detected.

Preferably in the aforementioned projector so configured that the optical axes of the laser beams of the visible light and the laser beam of the invisible light substantially coincide with each other, the optical axes of the laser beams of the visible light and the infrared laser beam substantially coincide with each other on a downstream side with respect to a reference point when a point on which the laser beams of the red, green, and blue visible light emitted from the first laser beam generation portion and the infrared laser beam emitted from the second laser beam generation portion are synthesized with each other is used as the reference point, and the second laser beam generation portion is arranged on an upstream side with respect to the reference point on an extended line of the optical axes of the laser beams of the visible light and the infrared laser beam substantially coinciding with each other. According to this structure, it is not necessary to change the optical axis of the infrared laser beam emitted from the second laser beam generation portion, and hence it is not necessary to provide a member changing the optical axis of the infrared laser beam emitted from the second laser beam generation portion. Therefore, it is not necessary to provide the member changing the optical axis, so that the structure of the projector can be inhibited from complication.

Preferably, the aforementioned projector including the laser beam generation portion emitting the red, green, and blue laser beams further includes a plurality of optical members reflecting each of the laser beams of red, green, and blue visible light emitted from the first laser beam generation portion and transmitting the infrared laser beam emitted from the second laser beam generation portion therethrough, and is so configured that the optical axes of the laser beams of the visible light and the laser beam of the invisible light substantially coincide with each other by reflecting the laser beams of the visible light emitted from the first laser beam generation portion by the plurality of optical members, respectively and transmitting the laser beam of the invisible light emitted from the second laser beam generation portion through the plurality of optical members. According to this structure, the plurality of optical members allow the optical axes of each of the laser beams of the red, green, and blue visible light emitted from the first laser beam generation portion and the laser beam of the invisible light emitted from the second laser beam generation portion to substantially coincide with each other easily.

Preferably in the aforementioned projector including the laser beam generation portion emitting the red, green, and blue laser beams, the light quantities of red, green, and blue visible light emitted from the first laser beam generation portion vary according to a projected image while the light quantity of infrared light emitted from the second laser beam generation portion is substantially constant. According to this structure, the light quantities of the visible light vary so that the image having shades can be projected, and the light quantity of the infrared light is substantially constant so that control for emitting the infrared light can be facilitated.

Preferably in the aforementioned projector in which the laser beam of the visible light and the laser beam of the invisible light are emitted to the projection portion in the state where the optical axes of the laser beam of the visible light and the laser beam of the invisible light, the projection portion includes a vibrating mirror projecting the image by scanning the arbitrary projection area in a vertical direction and a transverse direction, and the projector is so configured that the laser beam of the visible light and the laser beam of the invisible light are emitted to the vibrating mirror to be scanned in the state where the optical axes of the laser beam of the visible light emitted from the first laser beam generation portion and the laser beam of the invisible light emitted from the second laser beam generation portion substantially coincide with each other. According to this structure, the image can be projected on the projection area through the vibrating mirror in the state where the optical axes of the laser beam of the visible light and the laser beam of the invisible light substantially coincide with each other.

Preferably, the aforementioned projector according to the aspect further includes a splitter member projecting the image on a plurality of projection areas in the state where the optical axes of the laser beam of the visible light emitted from the first laser beam generation portion and the laser beam of the invisible light emitted from the second laser beam generation portion substantially coincide with each other. According to this structure, the projected image projected on one of the plurality of projection areas can be used for the operation of a user, and the projected image projected on another one of the plurality of projection areas can be used for presentation (for display), for example.

### Brief Description of the Drawings

[Fig. 1] A schematic view showing a used state of a projector according to an embodiment of the present invention.
[Fig. 2] A block diagram showing the structure of the projector according to the embodiment of the present invention.
[Fig. 3] A flowchart showing operations of a control portion of the projector according to the embodiment of the present invention.
[Fig. 4] A diagram for illustrating an operation of detecting the height of a detection object located at a relatively low position of the projector according to the embodiment of the present invention.
[Fig. 5] A diagram for illustrating an operation of detecting the height of the detection object located at a relatively high position of the projector according to the embodiment of the present invention.
[Fig. 6] A diagram for illustrating an operation of moving a pointer of the projector according to the embodiment of the present invention.
[Fig. 7] A plan view for illustrating the operation of moving the pointer shown in Fig. 6.
[Fig. 8] A diagram for illustrating a dragging and dropping operation of the projector according to the embodiment of the present invention.
[Fig. 9] A plan view for illustrating the dragging and dropping operation shown in Fig. 8.
[Fig. 10] A diagram for illustrating an operation of separating a finger from an icon of the projector according to the embodiment of the present invention.

### Modes for Carrying Out the Invention

An embodiment embodying the present invention is now described on the basis of the drawings.

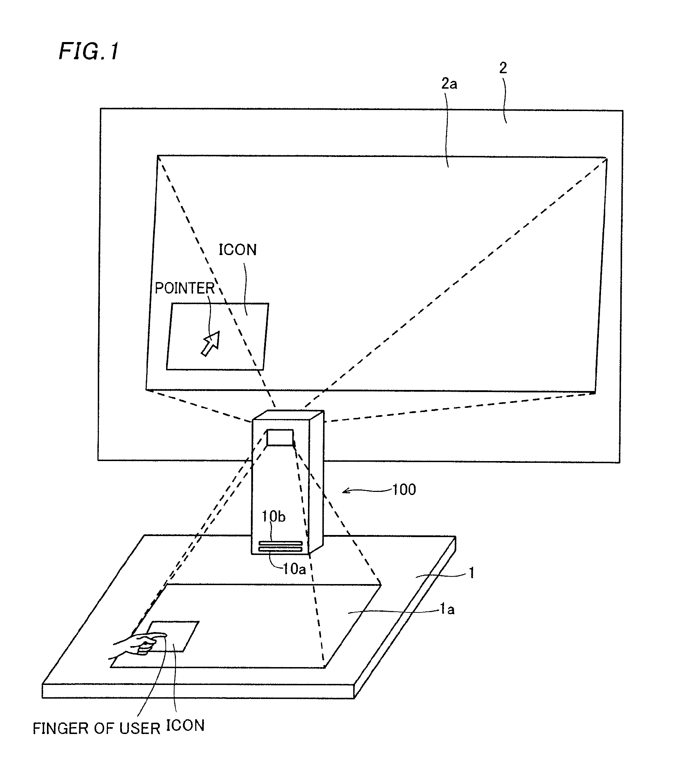

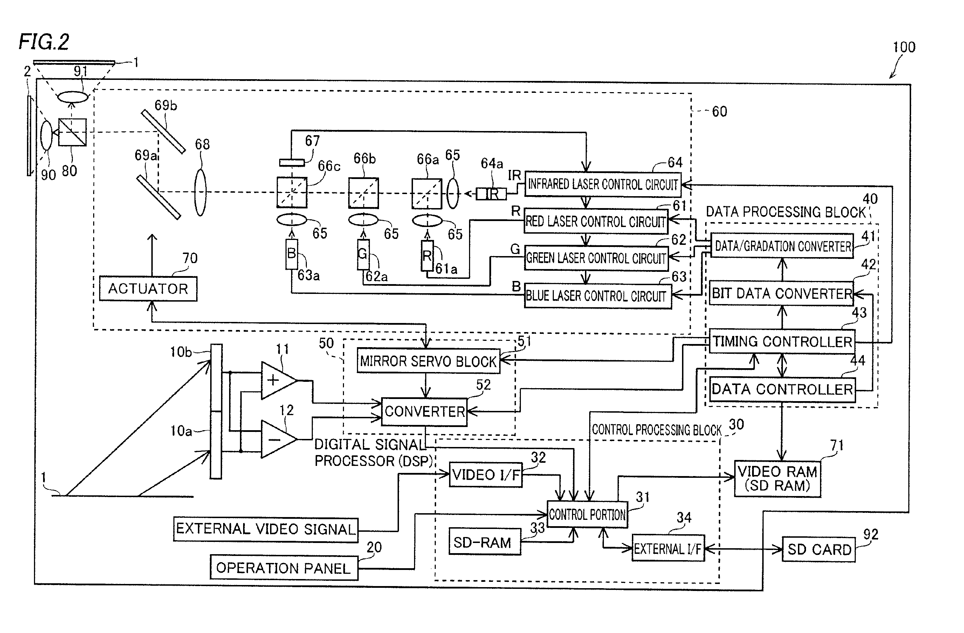

The structure of a projector 100 according to the embodiment of the present invention is described with reference to Figs. 1 and 2.

The projector 100 according to the embodiment of the present invention is configured to be used in a state arranged on a table 1, as shown in Fig. 1. Furthermore, the projector 100 is configured to project (two-dimensionally display (display in a planar manner)) an image 2a for presentation (for display) onto a projection area such as a screen 2. The table 1 and the screen 2 are examples of the "projection area" in the present invention. In addition, the projector 100 is configured to project (two-dimensionally display (display in a planar manner)) an image 1a similar to the image 2a for presentation onto the upper surface of a projection area such as the table 1. The projector 100 projects the image 1a on the table 1 so that the magnitude thereof is smaller than that of the image 2a projected on the screen 2. Two infrared detectors 10a and 10b to detect an infrared laser beam (laser beam of invisible light) are provided on a side surface of the projector 100 projecting the image 1a. The infrared detector 10b is so arranged that the height thereof from a surface of the table 1 is larger than the height of the infrared detector 10a from the surface of the table 1. The infrared detector 10a is an example of the "first light detector" in the present invention, and the infrared detector 10b is an example of the "second light detector" in the present invention.

As shown in Fig. 2, the projector 100 includes an operation panel 20, a control processing block 30, a data processing block 40, a digital signal processor (DSP) 50, a laser beam source 60, a video RAM (SD RAM) 71, a beam splitter 80, and two magnifying lenses 90 and 91. The beam splitter 80 is an example of the "splitter member" in the present invention.

The control processing block 30 includes a control portion 31 controlling the entire projector 100, a video I/F 32 which is an interface (I/F) to receive an external video signal, an SD-RAM 33, and an external I/F 34.

The data processing block 40 includes a data/gradation converter 41, a bit data converter 42, a timing controller 43, and a data controller 44.

The digital signal processor 50 includes a mirror servo block 51 and a converter 52.

The laser beam source 60 includes a red laser control circuit 61, a green laser control circuit 62, a blue laser control circuit 63, and an infrared laser control circuit 64. The red laser control circuit 61, the green laser control circuit 62, the blue laser control circuit 63, and the infrared laser control circuit 64 are connected with a red LD (laser diode) 61a emitting a red laser beam (laser beam of visible light), a green LD 62a emitting a green laser beam (laser beam of visible light), a blue LD 63a emitting a blue laser beam (laser beam of visible light), and an infrared LD 64a emitting an infrared laser beam, respectively. According to this embodiment, the optical axes of the laser beams emitted from the red LD 61a, the green LD 62a, the blue LD 63a, and the infrared LD 64a substantially coincide with each other when the laser beams are incident on a MEMS mirror 69a. The red LD 61a, the green LD 62a, and the blue LD 63a and the infrared LD 64a are configured to operate in synchronization with each other. The red, green, and blue laser beams emitted from the red LD 61a, the green LD 62a, and the blue LD 63a, respectively are scanned, whereby the images 1a and 2a are projected on the table 1 and the screen 2, respectively. The laser beams emitted from the red LD 61a, the green LD 62a, and the blue LD 63a, respectively and the infrared laser beam emitted from the infrared LD 64a are synthesized with each other on the same optical axis, whereby the laser beams are scanned through the same scan path in a state where the optical axes substantially coincide with each other. In other words, the position (coordinates) of the laser beams emitted from the red LD 61a, the green LD 62a, and the blue LD 63a, respectively on the table 1 and the position (coordinates) of the infrared laser beam emitted from the infrared LD 64a on the table 1 coincide with each other. Light emitted from the infrared LD 64a and reflected by a detection object such as the finger of a user (human) is detected by the infrared detectors 10a and 10b. Whereas the light quantities of the red, green, and blue laser beams emitted from the red LD 61a, the green LD 62a, and the blue LD 63a, respectively vary according to a projected image, the light quantity of the infrared laser beam emitted from the infrared LD 64a is substantially constant. The red LD 61a, the green LD 62a, and the blue LD 63a are examples of the "first laser beam generation portion" in the present invention, and the infrared LD 64a is an example of the "second laser beam generation portion" in the present invention.

The laser beam source 60 further includes four collimator lenses 65, three polarizing beam splitters 66a, 66b, and 66c, a light detector 67, a lens 68, the MEMS mirror 69a to horizontally scan the laser beams, a MEMS mirror 69b to vertically scan the laser beams, and an actuator 70 to horizontally and vertically drive the MEMS mirror 69a and the MEMS mirror 69b. The MEMS mirrors 69a and 69b are examples of the "projection portion" or the "vibrating mirror" in the present invention. The polarizing beam splitters 66a, 66b, and 66c are examples of the "optical member" in the present invention.

The projector 100 is so configured that the laser beams of the visible light emitted from the red LD 61a, the green LD 62a, and the blue LD 63a are changed in direction by about 90 degrees and are reflected by the three polarizing beam splitters 66a, 66b, and 66c, respectively while the infrared laser beam emitted from the infrared LD 64a is transmitted through the three polarizing beam splitters 66a, 66b, and 66c, whereby the optical axes of the laser beams of the visible light and the infrared laser beam substantially coincide with each other.

The projector 100 is so configured that the optical axes of the laser beams of the visible light and the infrared laser beam substantially coincide with each other on a downstream side with respect to a reference point (side of the polarizing beam splitter 66c on which the MEMS mirrors 69a and 69b are arranged) when a point (center point of the polarizing beam splitter 66c) on which each of the laser beams of the visible light emitted from the red LD 61a, the green LD 62a, and the blue LD 63a and the infrared laser beam emitted from the infrared LD 64a are synthesized with each other is used as the reference point. The infrared LD 64a is arranged on an upstream side with respect to the reference point on an extended line of the optical axes of the laser beams of the visible light and the infrared laser beam substantially coinciding with each other (side of the polarizing beam splitter 66c opposite to the side on which the MEMS mirrors 69a and 69b are arranged).

The operation panel 20 is provided on a front or side surface of a housing of the projector 100. The operation panel 20 includes a display (not shown) to display operation contents, switches accepting operational inputs into the projector 100, and the like, for example. The operation panel 20 is configured to transmit a signal responsive to operation contents to the control portion 31 of the control processing block 30 when accepting an operation of the user.

The projector 100 is so configured that the external video signal supplied from outside is input in the video I/F 32. The external I/F 34 is so configured that a memory such as an SD card 92, for example, is mountable thereon. The projector 100 is so configured that the control portion 31 reads data from the SD card 92 and the video RAM 71 stores the read data.

The control portion 31 is configured to control display of a picture based on image data temporarily held in the video RAM 71 by intercommunicating with the timing controller 43 of the data processing block 40.

In the data processing block 40, the timing controller 43 is configured to read data held in the video RAM 71 through the data controller 44 on the basis of a signal output from the control portion 31. The data controller 44 is configured to transmit the read data to the bit data converter 42. The bit data converter 42 is configured to transmit the data to the data/gradation converter 41 on the basis of a signal from the timing controller 43. The bit data converter 42 has a function of converting externally supplied image data to data suitable to a system projectable with the laser beams. The timing controller 43 is connected to the infrared laser control circuit 64 and is configured to transmit a signal to the infrared laser control circuit 64 in order to emit the laser beam from the infrared LD 64a in synchronization with the laser beams emitted from the red LD 61a, the green LD 62a, and the blue LD 63a.

The data/gradation converter 41 is configured to convert data output from the bit data converter 42 to gradations of three colors of red (R), green (G), and blue (B) and to transmit data after conversion to the red laser control circuit 61, the green laser control circuit 62, and the blue laser control circuit 63.

The red laser control circuit 61 is configured to transmit the data from the data/gradation converter 41 to the red LD 61a. The green laser control circuit 62 is configured to transmit the data from the data/gradation converter 41 to the green LD 62a. The blue laser control circuit 63 is configured to transmit the data from the data/gradation converter 41 to the blue LD 63a.

The two infrared detectors 10a and 10b provided on the side surface of the projector 100 projecting the image 1a each are connected with an adder 11 and a subtractor 12. The adder 11 has a function of adding the intensity of light detected by the infrared detector 10a and the intensity of light detected by the infrared detector 10b to each other. The subtractor 12 has a function of subtracting the intensity of the light detected by the infrared detector 10a and the intensity of the light detected by the infrared detector 10b from each other. The projector 100 is so configured that signals output from the adder 11 and the subtractor 12 are input in the control portion 31 through the converter 52.

The control portion 31 is configured to calculate the height of the detection object (finger of the user) from the table 1 on the basis of a difference between the intensity of light reflected from the detection object and detected by the infrared detector 10a and the intensity of light reflected from the detection object and detected by the infrared detector 10b. Furthermore, the control portion 31 is configured to determine an operation of dragging an icon or an operation of separating the detection object from the icon on the basis of the height of the detection object from the table 1 detected by the infrared detectors 10a and 10b and to project a picture representing drag of the icon and movement of the icon in conjunction with movement of the detection object after determining that the icon has been dragged.

Next, operations of the control portion 31 in detecting the detection object by the projector 100 are described with reference to Figs. 1 and 3 to 10.

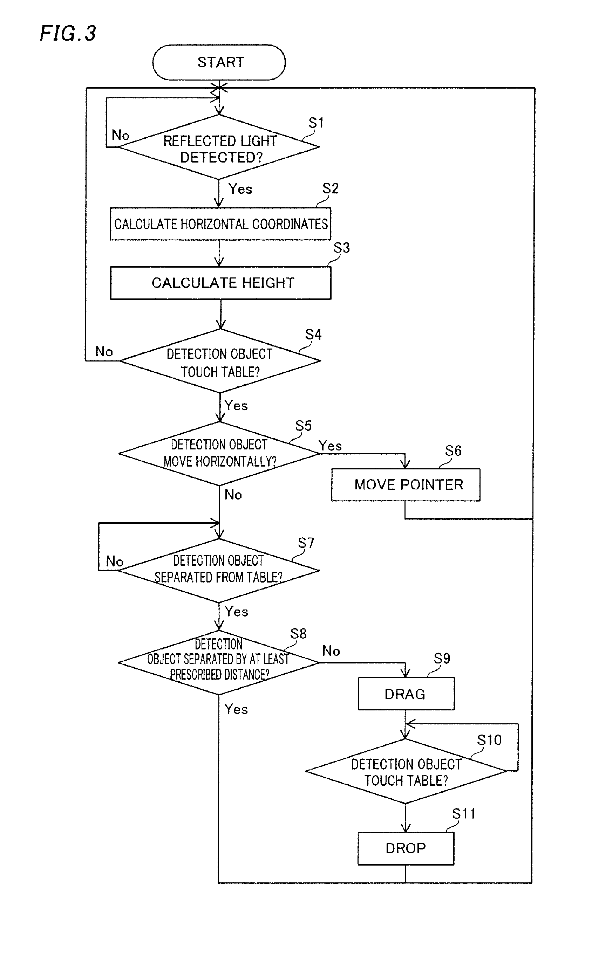

As shown in Fig. 1, the red LD 61a, the green LD 62a, and the blue LD 63a (see Fig. 2) emit the red, green, and blue laser beams, respectively, and the laser beams are scanned, whereby the images 1a and 2a are projected on the table 1 and the screen 2, respectively. For example, an image such as the icon is projected on the table 1 and the screen 2. Furthermore, the infrared LD 64a emits the infrared laser beam in synchronization with the red LD 61a, the green LD 62a, and the blue LD 63a, and the laser beam is scanned. As shown in Fig. 3, the control portion 31 determines whether or not the infrared laser beam emitted from the infrared LD 64a and reflected by the detection object (finger of the user, for example) has been detected by the infrared detectors 10a and 10b at a step S1. When the infrared laser beam reflected by the detection object has not been detected by the infrared detectors 10a and 11b, the control portion 31 repeats the operation at the step S1.

When determining that the infrared laser beam reflected by the detection object has been detected by the infrared detectors 10a and 10b at the step S1, the control portion 31 advances to a step S2. According to this embodiment, at the step S2, the control portion 31 determines the coordinates (coordinates on the table 1) of the image 1a scanned with the laser beams emitted from the red LD 61a, the green LD 62a, and the blue LD 63a at the point of time when the infrared detectors 10a and 10b detect the light reflected from the detection object as the coordinates of the detection object on the table 1. When the detection object is the finger of the user, the intensity of light reflected from the nail of the finger is larger than the intensity of light reflected from the skin of the finger. The control portion 31 adds the intensity of the light reflected from the detection object and detected by the infrared detector 10a and the intensity of the light reflected from the detection object and detected by the infrared detector 10b to each other with the adder 11 (see Fig. 2) and determines the coordinates of the image 1a emitted from the red LD 61a, the green LD 62a, and the blue LD 63a at the point of time when the added intensity of the reflected light is largest (at the point of time when the light is reflected from the finger) as the coordinates of the detection object on the table 1, whereby the control portion 31 can specify a portion of the image touched by the finger of the user.

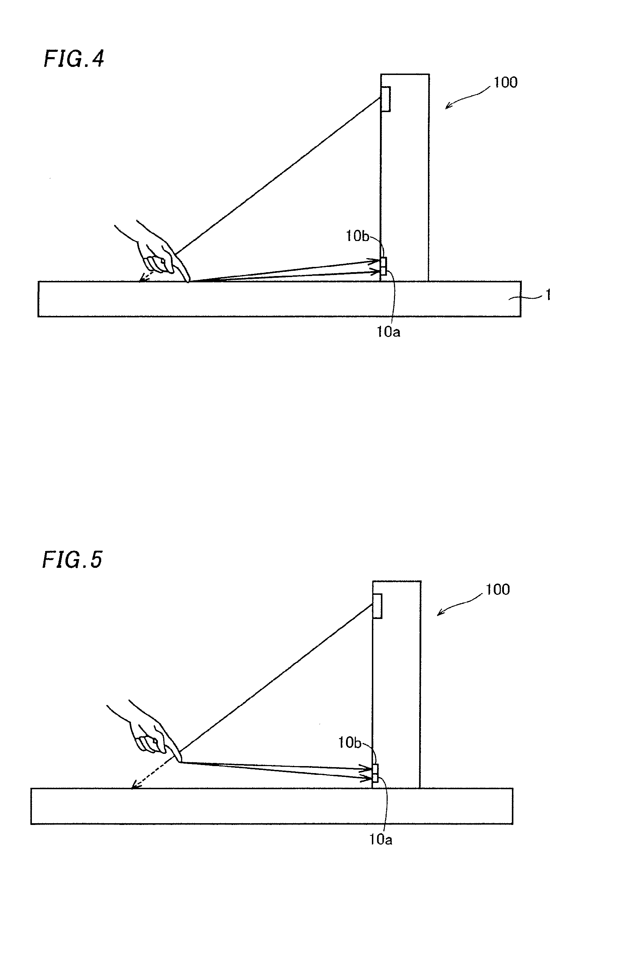

Then, the control portion 31 advances to a step S3, and calculates the height of the detection object from the table 1 on the basis of the difference between the intensity of the light reflected from the detection object and detected by the infrared detector 10a and the intensity of the light reflected from the detection object and detected by the infrared detector 10b. Specifically, when the detection object (finger of the user) touches the surface of the table 1 as shown in Fig. 4, for example, the intensity of the light reflected from the detection object and detected by the infrared detector 10a is larger than the intensity of the light reflected from the detection object and detected by the infrared detector 10b provided at a position higher than the infrared detector 10a since the distance of the infrared detector 10a to the detection object is smaller. On the other hand, when the detection object (finger of the user) is separated from the surface of the table 1 as shown in Fig. 5, the intensity of the light reflected from the detection object and detected by the infrared detector 10b is larger than the intensity of the light reflected from the detection object and detected by the infrared detector 10a provided at a position lower than the infrared detector 10b since the distance of the infrared detector 10b to the detection object is smaller. Thus, the height of the detection object from the surface of the table 1 varies, whereby the intensity of the reflected light detected by the infrared detector 10a and the intensity of the reflected light detected by the infrared detector 10b vary. Therefore, the height of the detection object from the surface of the table 1 can be calculated from the magnitude of the difference between the intensity of the reflected light detected by the infrared detector 10a and the intensity of the reflected light detected by the infrared detector 10b.

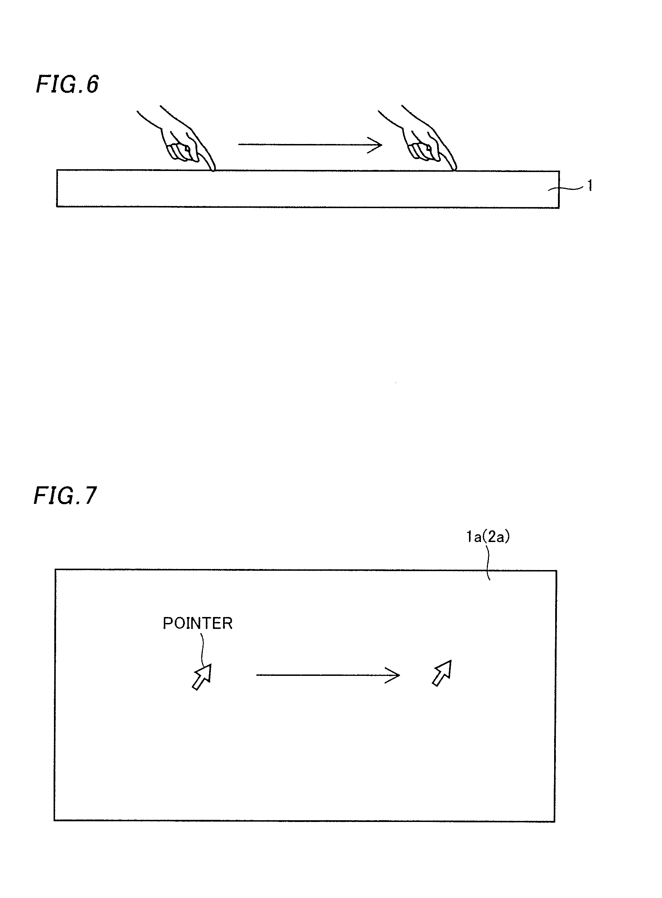

Then, the control portion 31 advances to a step S4, and determines whether or not the detection object touches the surface of the table 1 (whether or not the height of the detection object from the surface of the table 1 is zero). When determining that the detection object does not touch the surface of the table 1 at the step S4, the control portion 31 returns to the step S1. In other words, the control portion 31 repeats the operations at the steps S1 to S4 until the detection object touches the surface of the table 1. When determining that the detection object touches the surface of the table 1 at the step S4, the control portion 31 advances to a step S5, and determines whether or not the detection object has moved horizontally on the surface of the table 1. In other words, the control portion 31 determines whether or not the detection object has moved on the surface of the table 1 while the height of the detection object from the surface of the table 1 is maintained zero, as shown in Fig. 6. When determining that the detection object has moved horizontally on the surface of the table 1, the control portion 31 advances to a step S6, and projects a picture representing movement of a pointer in conjunction with the movement of the detection object on the table 1 and the screen 2, as shown in Fig. 7. Thereafter, the control portion 31 returns to the step S1.

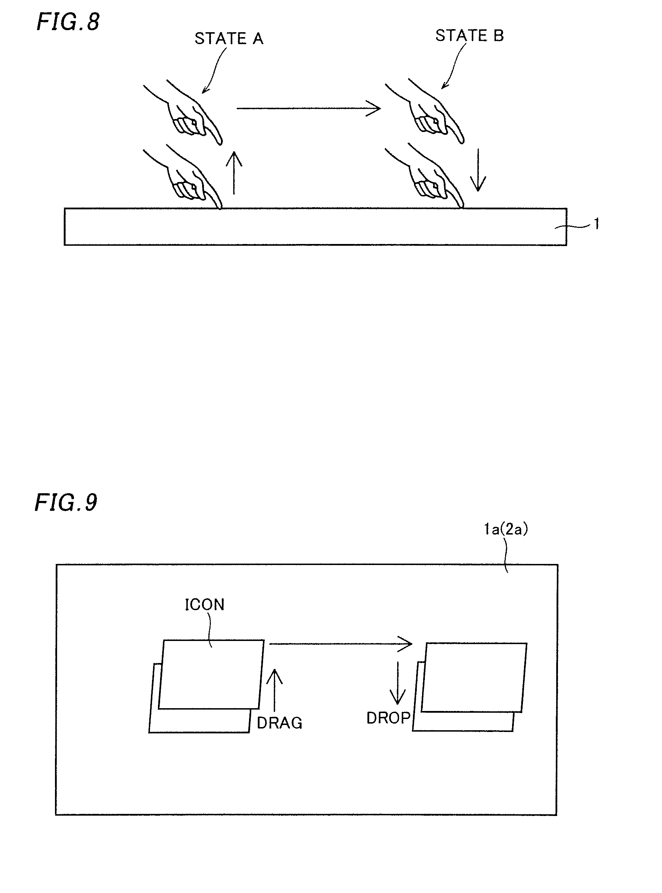

When determining that the detection object has not moved horizontally on the surface of the table 1 at the step S5, the control portion 31 advances to a step S7, and determines whether or not the detection object is separated from the surface of the table 1 (whether or not the height of the detection object from the surface of the table 1 is greater than zero). It is assumed that the coordinates of the detection object on the table 1 correspond to the image of the icon. When determining that the detection object is separated from the surface of the table 1 at the step S7, the control portion 31 advances to a step S8, and determines whether or not the distance of the detection object from the surface of the table 1 is at least a prescribed distance. When determining that the distance of the detection object from the surface of the table 1 is less than the prescribed distance (see a state A in Fig. 8) at the step S8, the control portion 31 advances to a step S9, and determines that the detection object (finger of the user) has dragged the icon projected on the table 1. As shown in Fig. 9, the picture representing the drag of the icon is projected on the table 1 (screen 2). Thereafter, the image of the icon is moved in conjunction with the movement of the detection object (a state B in Fig. 8). When determining that the detection object touches the surface of the table 1 at a step S10, the control portion 31 determines that the icon has been dropped at a step S11. Then, a picture representing the drop of the icon is projected on the table 1 (screen 2). Thereafter, the control portion 31 returns to the step S1.

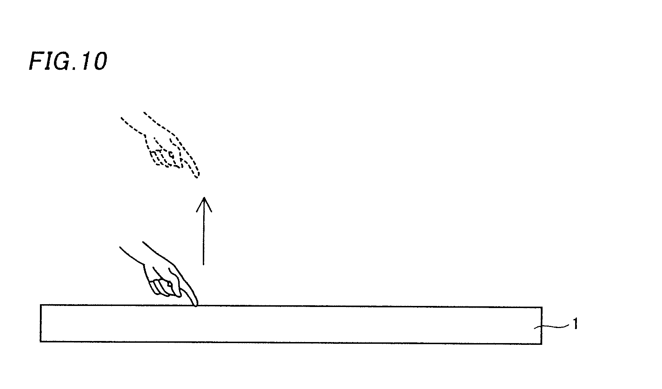

When determining that the distance of the detection object from the surface of the table 1 is at least the prescribed distance (see Fig. 10) at the step S8, the control portion 31 determines that the detection object (finger of the user) has released the icon projected on the table 1. Thereafter, the control portion 31 returns to the step S1.

According to this embodiment, as hereinabove described, the projector 100 is so configured that the optical axes of the laser beams of the visible light emitted from the red LD 61a, the green LD 62a, and the blue LD 63a, respectively and the infrared laser beam of the invisible light emitted from the infrared LD 64a substantially coincide with each other. Thus, the infrared laser beam is emitted to the area on which the image is projected with the laser beams of three colors of red, green, and blue, and hence it is not necessary to provide a reflective mirror or the like separately to emit the infrared laser beam to the area on which the image is projected with the laser beams of three colors of red, green, and blue. Therefore, the structure can be inhibited from complication. Furthermore, the projector 100 includes the infrared LD 64a emitting the invisible light scanned in synchronization with the laser beams of the visible light emitted from the red LD 61a, the green LD 62a, and the blue LD 63a, respectively to detect the position of the detection object (finger of the user), whereby the position of the detection object (finger of the user) can be detected on the basis of the detection of the infrared laser beam of the invisible light reflected by the detection object (finger of the user).

According to this embodiment, as hereinabove described, the laser beams of the visible light and the infrared laser beam of the invisible light are emitted to the MEMS mirrors 69a and 69b in the state where the optical axes of the laser beams of the visible light emitted from the red LD 61a, the green LD 62a, and the blue LD 63a and the infrared laser beam emitted from the infrared LD 64a substantially coincide with each other. Thus, the image 1a (2a) can be projected on the table 1 (screen 2) by the MEMS mirrors 69a and 69b in the state where the optical axes of the laser beams of the visible light and the infrared laser beam of the invisible light substantially coincide with each other.

According to this embodiment, as hereinabove described, the laser beams of the visible light emitted from the red LD 61a, the green LD 62a, and the blue LD 63a, respectively and the infrared laser beam of the invisible light emitted from the infrared LD 64a are scanned through the same scan path. Thus, the optical axes of the laser beams of the visible light emitted from the red LD 61a, the green LD 62a, and the blue LD 63a, respectively and the infrared laser beam of the invisible light emitted from the infrared LD 64a coincide with each other, and hence the position of the detection object can be easily detected on the basis of the scan path of the laser beams of the visible light emitted from the red LD 61a, the green LD 62a, and the blue LD 63a, respectively at the point of time when the infrared laser beam of the invisible light is reflected by the detection object (finger of the user), for example.

According to this embodiment, as hereinabove described, the infrared detector 10a detects the infrared laser beam of the invisible light emitted from the infrared LD 64a and reflected by the detection object (finger of the user). Thus, even if the detection object is black, the infrared laser beam of the invisible light reflected by the detection object can be detected by the infrared detector 10a so that the position of the detection object (finger of the user) can be detected on the basis of the detection of the infrared laser beam of the invisible light by the infrared detector 10a.

According to this embodiment, as hereinabove described, the control portion 31 performs control of detecting the position of the detection object (finger of the user) on the basis of the scan signals of the laser beams of the visible light emitted from the red LD 61a, the green LD 62a, and the blue LD 63a at the point of time when the infrared detector 10a detects the infrared laser beam of the invisible light emitted from the infrared LD 64a and reflected by the detection object (finger of the user). Thus, dissimilarly to a case where the position of the detection object is detected by calculating the distance between the detection object and the infrared detector 10a, for example, the position of the detection object can be detected on the basis of the scan signals of the laser beams which the projector intrinsically has, and hence the operation (calculation) time required to detect the position of the detection object can be reduced.

According to this embodiment, as hereinabove described, the control portion 31 performs control of detecting the coordinates based on the scan signals of the laser beams of the visible light emitted from the red LD 61a, the green LD 62a, and the blue LD 63a at the point of time when the infrared detector 10a detects the infrared laser beam of the invisible light emitted from the infrared LD 64a and reflected by the detection object (finger of the user) as the coordinates of the detection object (finger of the user). Thus, the coordinates (position) of the detection object can be detected on the basis of the scan signals of the laser beams which the projector 100 intrinsically has, and hence the operation (calculation) time required to detect the coordinates (position) of the detection object can be reduced.

According to this embodiment, as hereinabove described, the height of the finger of the user from the table 1 is calculated on the basis of the difference between the intensity of the infrared laser beam detected by the infrared detector 10a and the intensity of the infrared laser beam detected by the infrared detector 10b. Thus, in addition to the position of the finger of the user on a plane surface, the height of the detection object from the table 1 is detected, and hence the three-dimensional position of the finger of the user can be detected.

According to this embodiment, as hereinabove described, the control portion 31 determines the operation of dragging the icon or the operation of separating the finger of the user from the icon on the basis of the height of the finger of the user from the table 1 detected by the infrared detectors 10a and 10b, and projects the picture representing the drag of the icon and the movement of the icon in conjunction with the movement of the finger of the user when determining that the icon has been dragged. Thus, in addition to the operation on the table 1 such as an operation of selecting the icon, the operation at a height position away from the table 1 to some extent such as the operation of dragging the icon can be performed, and hence the types of possible operations can be increased.

According to this embodiment, as hereinabove described, the control portion 31 determines that the finger of the user has dragged the icon projected on the table 1 if the height of the finger of the user from the surface of the table 1 is less than a prescribed height, when determining that the finger of the user is separated from the surface of the table 1 after determining that the height of the finger of the user from the surface of the table 1 is substantially zero on the basis of the height of the finger of the user from the table 1 detected by the infrared detectors 10a and 10b. Thus, the picture representing the drag of the icon can be easily projected on the basis of the operation of the finger of the user.

According to this embodiment, as hereinabove described, the control portion 31 determines that the finger of the user has dropped the icon projected on the table 1 when determining that the height of the finger of the user from the surface of the table 1 is substantially zero on the basis of the height of the finger of the user from the table 1 detected by the infrared detectors 10a and 10b after determining that the finger of the user has dragged the icon projected on the table 1. Thus, the picture representing the drop of the icon can be easily projected on the basis of the operation of the finger of the user.

According to this embodiment, as hereinabove described, the control portion 31 determines that the finger of the user has released the icon projected on the table 1 if the height of the finger of the user from the surface of the table 1 is at least the prescribed height, when determining that the finger of the user is separated from the surface of the table 1 after determining that the height of the finger of the user from the surface of the table 1 is substantially zero on the basis of the height of the finger of the user from the table 1 detected by the infrared detectors 10a and 10b. Thus, the picture representing the release of the icon can be easily projected on the basis of the operation of the finger of the user.

According to this embodiment, as hereinabove described, the infrared detectors 10a and 10b detect the infrared laser beam emitted from the infrared LD 64a and reflected by the finger of the user. Thus, a position on the table 1 touched by the finger of the user can be detected when the finger of the user touches the table 1.

According to this embodiment, as hereinabove described, the first laser beam generation portion according to the present invention includes the red LD 61a, the green LD 62a, and the blue LD 63a emitting the red, green, and blue laser beams, respectively as the visible light, and the second laser beam generation portion according to the present invention includes the infrared LD 64a emitting the infrared laser beam as the invisible light. Thus, a color image can be displayed on the table 1 with the red, green, and blue laser beams emitted from the red LD 61a, the green LD 62a, and the blue LD 63a, respectively as the visible light, and the position of the detection object (finger of the user) can be detected with the infrared laser beam emitted from the infrared LD 64a as the invisible light. Furthermore, also when a black image is displayed on the table 1 or the screen 2 with the red, green, and blue laser beams as the visible light, the infrared laser beam as the invisible light is reflected by the detection object (finger of the user) so that the position of the detection object (finger of the user) can be detected.

According to this embodiment, as hereinabove described, the optical axes of the laser beams of the visible light and the infrared laser beam substantially coincide with each other on the downstream side with respect to the reference point when the point on which the infrared laser beam emitted from the infrared LD 64a is synthesized is used as the reference point, and the infrared LD 64a is arranged on the upstream side with respect to the reference point on the extended line of the optical axes of the laser beams of the visible light and the infrared laser beam substantially coinciding with each other. Thus, it is not necessary to change the optical axis of the infrared laser beam emitted from the infrared LD 64a, and hence it is not necessary to provide a member changing the optical axis of the infrared laser beam emitted from the infrared LD 64a. Therefore, it is not necessary to provide the member changing the optical axis, so that the structure of the projector 100 can be inhibited from complication.

According to this embodiment, as hereinabove described, the laser beams of the visible light emitted from the red LD 61a, the green LD 62a, and the blue LD 63a are reflected by the three polarizing beam splitters 66a, 66b, and 66c, respectively while the infrared laser beam emitted from the infrared LD 64a is transmitted through the three polarizing beam splitters 66a, 66b, and 66c, so that the optical axes of the laser beams of the visible light and the infrared laser beam substantially coincide with each other. Thus, the three polarizing beam splitters 66a, 66b, and 66c allow the optical axes of each of the laser beams of the red, green, and blue visible light emitted from the red LD 61a, the green LD 62a, and the blue LD 63a and the infrared laser beam of the invisible light emitted from the infrared LD 64a to substantially coincide with each other easily.

According to this embodiment, as hereinabove described, the light quantities of the red, green, and blue visible light emitted from the red LD 61a, the green LD 62a, and the blue LD 63a vary according to the projected image 1a (2a) while the light quantity of the infrared light emitted from the infrared LD 64a is substantially constant. Thus, the light quantities of the visible light vary so that the image 1a (2a) having shades can be projected, and the light quantity of the infrared light is substantially constant so that control for emitting the infrared laser beam can be facilitated.

According to this embodiment, as hereinabove described, the laser beams of the visible light and the infrared laser beam are emitted to the MEMS mirrors 69a and 69b to be scanned in the state where the optical axes of the laser beams of the visible light emitted from the red LD 61a, the green LD 62a, and the blue LD 63a and the infrared laser beam emitted from the infrared LD 64a substantially coincide with each other. Thus, the image 1a (2a) can be projected on the table 1 (screen 2) through the MEMS mirrors 69a and 69b in the state where the optical axes of the laser beams of the visible light and the infrared laser beam substantially coincide with each other.

According to this embodiment, as hereinabove described, the beam splitter 80 projecting the image 1a (2a) on the table 1 (screen 2) in the state where the optical axes of the laser beams of the visible light emitted from the red LD 61a, the green LD 62a, and the blue LD 63a and the infrared laser beam emitted from the infrared LD 64a substantially coincide with each other is provided. Thus, the image 1a projected on the table 1 can be used for the operation of the user, and the image 2a projected on the screen 2 can be used for presentation (for display).

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the example of projecting the image by emitting the laser beams of three colors of red, green, and blue has been shown in the aforementioned embodiment, the present invention is not restricted to this. For example, laser beams of one color or two colors may be emitted to project the image, or laser beams of more than three colors may be emitted to project the image.

While the example of detecting the position (coordinates) of the detection object by emitting the infrared laser beam has been shown in the aforementioned embodiment, the present invention is not restricted to this. For example, the position (coordinates) of the detection object may be detected with a laser beam of invisible light other than the infrared laser beam.

While the example of providing the two infrared detectors on the projector has been shown in the aforementioned embodiment, the present invention is not restricted to this. For example, one or more than two infrared detectors may be provided on the projector.

While the example of calculating the position (coordinates) of the detection object on the basis of the difference between the intensity of the light detected by one infrared detector and the intensity of the light detected by another infrared detector has been shown in the aforementioned embodiment, the present invention is not restricted to this. According to the present invention, the position (coordinates) of the detection object may be calculated by a method other than the calculation based on the difference between the intensity of the light detected by one infrared detector and the intensity of the light detected by another infrared detector.

While the example of obtaining the three-dimensional coordinates of the detection object has been shown in the aforementioned embodiment, the present invention is not restricted to this. For example, the coordinates (two-dimensional coordinates) of the detection object on the table 1 may be obtained. In this case, one infrared detector may be provided on the projector.

## Claims

1. A projector (100) comprising:
a first laser beam generation portion (61a, 62a, 63a) emitting a laser beam of visible light;
a second laser beam generation portion (64a) emitting invisible light scanned in synchronization with the laser beam of the visible light emitted from the first laser beam generation portion to detect a position of a detection object; and
a projection portion (69a, 69b) projecting an image on an arbitrary projection area (1, 2) by scanning the laser beam of the visible light emitted from the first laser beam generation portion, and
so configured that optical axes of the laser beam of the visible light emitted from the first laser beam generation portion and a laser beam of the invisible light emitted from the second laser beam generation portion substantially coincide with each other.

2. The projector according to claim 1, so configured that the laser beam of the visible light and the laser beam of the invisible light are emitted to the projection portion in a state where the optical axes of the laser beam of the visible light emitted from the first laser beam generation portion and the laser beam of the invisible light emitted from the second laser beam generation portion substantially coincide with each other.

3. The projector according to claim 1, so configured that the laser beam of the visible light emitted from the first laser beam generation portion and the laser beam of the invisible light emitted from the second laser beam generation portion are scanned through the same scan path.

4. The projector according to claim 1, further comprising a light detector (10a, 10b) to detect the laser beam of the invisible light emitted from the second laser beam generation portion and reflected by the detection object.

5. The projector according to claim 4, further comprising a control portion (31) detecting the position of the detection object on the basis of a scan signal of the laser beam of the visible light emitted from the first laser beam generation portion at the point of time when the light detector detects the laser beam of the invisible light emitted from the second laser beam generation portion and reflected by the detection object.

6. The projector according to claim 5, wherein
the control portion is configured to detect coordinates based on the scan signal of the laser beam of the visible light emitted from the first laser beam generation portion at the point of time when the light detector detects the laser beam of the invisible light emitted from the second laser beam generation portion and reflected by the detection object as coordinates of the detection object.

7. The projector according to claim 5, wherein
the light detector includes a first light detector (10a) and a second light detector (10b) whose height from the projection area is higher than that of the first light detector, and
the control portion is configured to perform control of calculating a height of the detection object from the projection area on the basis of a difference between an intensity of the invisible light detected by the first light detector and an intensity of the invisible light detected by the second light detector.

8. The projector according to claim 7, configured to project an image corresponding to an icon on the projection area by scanning the laser beam of the visible light emitted from the first laser beam generation portion, wherein
the control portion is configured to determine an operation of dragging the icon or an operation of separating the detection object from the icon on the basis of the height of the detection object from the projection area detected by the first light detector and the second light detector and to project a picture representing drag of the icon and movement of the icon in conjunction with movement of the detection object when determining that the icon has been dragged.

9. The projector according to claim 8, wherein
the control portion is configured to determine that the detection object has dragged the icon projected on the projection area if the height of the detection object from a surface of the projection area is less than a prescribed height, when determining that the detection object is separated from the surface of the projection area after determining that the height of the detection object from the surface of the projection area is substantially zero on the basis of the height of the detection object from the projection area detected by the first light detector and the second light detector.

10. The projector according to claim 9, wherein
the control portion is configured to determine that the detection object has dropped the icon projected on the projection area when determining that the height of the detection object from the surface of the projection area is substantially zero on the basis of the height of the detection object from the projection area detected by the first light detector and the second light detector after determining that the detection object has dragged the icon projected on the projection area.

11. The projector according to claim 8, wherein
the control portion is configured to determine that the detection object has released the icon projected on the projection area if the height of the detection object from the surface of the projection area is at least a prescribed height, when determining that the detection object is separated from the surface of the projection area after determining that the height of the detection object from the surface of the projection area is substantially zero on the basis of the height of the detection object from the projection area detected by the first light detector and the second light detector.

12. The projector according to claim 4, wherein
the detection object is a human finger, and
the light detector is configured to detect the laser beam of the invisible light emitted from the second laser beam generation portion and reflected by the human finger as the detection object.

13. The projector according to claim 1, wherein
the second laser beam generation portion includes an infrared laser beam generation portion (64a) emitting an infrared laser beam as the invisible light.

14. The projector according to claim 13, wherein
the first laser beam generation portion includes a laser beam generation portion (61a, 62a, 63a) emitting red, green, and blue laser beams as the visible light.

15. The projector according to claim 14, so configured that optical axes of the laser beams of the visible light and the laser beam of the invisible light substantially coincide with each other by synthesizing the laser beams of red, green, and blue visible light emitted from the first laser beam generation portion and the infrared laser beam emitted from the second laser beam generation portion on the same optical axis.

16. The projector according to claim 15, wherein
optical axes of the laser beams of the visible light and the infrared laser beam substantially coincide with each other on a downstream side with respect to a reference point when a point on which the laser beams of the red, green, and blue visible light emitted from the first laser beam generation portion and the infrared laser beam emitted from the second laser beam generation portion are synthesized with each other is used as the reference point, and the second laser beam generation portion is arranged on an upstream side with respect to the reference point on an extended line of the optical axes of the laser beams of the visible light and the infrared laser beam substantially coinciding with each other.

17. The projector according to claim 14, further comprising a plurality of optical members (66a, 66b, 66c) reflecting each of the laser beams of red, green, and blue visible light emitted from the first laser beam generation portion and transmitting the infrared laser beam emitted from the second laser beam generation portion therethrough, and
so configured that optical axes of the laser beams of the visible light and the laser beam of the invisible light substantially coincide with each other by reflecting the laser beams of the visible light emitted from the first laser beam generation portion by the plurality of optical members, respectively and transmitting the laser beam of the invisible light emitted from the second laser beam generation portion through the plurality of optical members.

18. The projector according to claim 14, wherein
light quantities of red, green, and blue visible light emitted from the first laser beam generation portion vary according to a projected image while a light quantity of infrared light emitted from the second laser beam generation portion is substantially constant.

19. The projector according to claim 2, wherein
the projection portion includes a vibrating mirror (69a, 69b) projecting the image by scanning the arbitrary projection area in a vertical direction and a transverse direction, and
the projector is so configured that the laser beam of the visible light and the laser beam of the invisible light are emitted to the vibrating mirror to be scanned in the state where the optical axes of the laser beam of the visible light emitted from the first laser beam generation portion and the laser beam of the invisible light emitted from the second laser beam generation portion substantially coincide with each other.

20. The projector according to claim 1, further comprising a splitter member (80) projecting the image on a plurality of projection areas in the state where the optical axes of the laser beam of the visible light emitted from the first laser beam generation portion and the laser beam of the invisible light emitted from the second laser beam generation portion substantially coincide with each other.
